# EUROPEAN PATENT APPLICATION

(11) **EP 4 141 417 A1**
(43) Date of publication of application: **01.03.2023**
(21) Application number: 22191828.7
(22) Date of filing: 24.08.2022
(51) Int. Cl.: G01N 21/31, G01N 21/82, G01N 21/27

(54) **SAMPLE ANALYSIS DEVICE AND SAMPLE ANALYSIS METHOD**

(30) Priority: 24.08.2021 CN 202110975227
(71) Applicant: Shenzhen Mindray Bio-Medical Electronics Co., Ltd., Shenzhen, Guangdong 518057 (CN); Beijing Shen Mindray Medical Electronics Technology Research Institute Co., Ltd., Beijing 100085 (CN)
(72) Inventor: SUN, Xiao, Shenzhen, 518057 (CN); GUO, Wenheng, Shenzhen, 518057 (CN); LI, Xin, 518057, 518057 (CN)
(74) Representative: KIPA AB

(57) **Abstract**

Sample analysis devices and methods are provided. The sample analysis device includes a sample apparatus, a reagent apparatus, a sample loading apparatus, a reagent dispensing apparatus, a control component, a receiving component, an analysis component, and a multi-color LED configured to provide a light beam. The multi-color LED includes a shell and a plurality of light-emitting chips arranged in the shell. The control component controls the multi-color LED to output a light beam with a respective wavelength range within a period of time, and applies the outputted light beam to irradiate a reaction vessel containing a test object. The receiving component acquires interferent test optical information and item test optical information. The analysis component obtains an interferent test result of the test object, and obtains an item test result of the test object according to the interferent test result and the item test optical information.

## Description

### TECHNICAL FIELD

The present invention relates to the technical field of sample analysis devices, and in particular, to a sample analysis device and a sample analysis method.

### BACKGROUND

A sample analysis device usually tests and analyzes a sample by using an optical method. Taking a biological sample test device for testing various items of blood coagulation by the optical method as an example, different wavelengths are used by three different methods, that is, a coagulation assay, an immunoturbidimetric assay, and a chromogenic substrate assay. In order to enable each channel to test all items, a multi-wavelength test method is generally used.

At present, light sources in the sample analysis device are Light-Emitting Diodes (LEDs) adopting a plurality of wavelengths. Each LED is coupled to one of a plurality of optical input ends at one end of a one-to-multiple optical fiber, so as to realize optical combining. The other end of the optical fiber may be a test site, or may also be of a one-to-multiple structure, that is, the other end of the optical fiber has a plurality of optical output ends. Each optical output end corresponds to one test site, and a reaction cup at the test site is irradiated for testing.

However, since a plurality of LEDs need to be arranged, a corresponding shaping component is required for coupling each LED into the optical fiber, which is not beneficial to a compact design.

Therefore, how to realize a compact design is an urgent problem to be solved by those skilled in the art.

### SUMMARY

In view of this, the invention provides a sample analysis device to realize a compact design.

To achieve the abovementioned objective, the invention provides the following technical solution.

A sample analysis device includes a sample apparatus, a reagent apparatus, a sample loading apparatus, a reagent dispensing apparatus, a multi-color LED configured to provide a light beam, a control component, a receiving component, and an analysis component.

The sample apparatus is configured to carry a sample vessel loaded with a sample.

The reagent apparatus is configured to carry a reagent vessel loaded with a reagent.

The sample loading apparatus is configured to aspirate the sample from the sample vessel and dispense the sample into a reaction vessel.

The reagent dispensing apparatus is configured to aspirate a reagent from the reagent vessel and dispense the reagent into the reaction vessel. The sample and the reagent form a mixed solution.

The multi-color LED includes a shell and a plurality of light-emitting chips arranged in the shell, and the plurality of light-emitting chips respectively generate light beams with different wavelength ranges.

The control component is configured to control the multi-color LED to output a light beam with a respective wavelength range within a period of time, and apply the outputted light beam to irradiate the reaction vessel containing a test object. The test object is the sample or the mixed solution.

The receiving component is configured to acquire interferent test optical information and item test optical information after the light beam irradiates the test object. At least one test site is arranged between the multi-color LED and the receiving component, and the test site is configured to place the reaction vessel containing the test obj ect.

The analysis component is configured to obtain an interferent test result of the test object according to the interferent test optical information, and obtain an item test result of the test object according to the interferent test result and the item test optical information.

The invention further provides a sample analysis device, which includes a sample apparatus, a reagent apparatus, a sample loading apparatus, a reagent dispensing apparatus, two light source components, a control component, a receiving component, and an analysis component.

The sample apparatus is configured to carry a sample vessel loaded with a sample.

The reagent apparatus is configured to carry a reagent vessel loaded with a reagent.

The sample loading apparatus is configured to aspirate the sample from the sample vessel and dispense the sample into a reaction vessel.

The reagent dispensing apparatus is configured to aspirate the reagent from the reagent vessel and dispense the reagent into the reaction vessel. The sample and the reagent form a mixed solution.

At least one of the two light source components is a multi-color LED. The multi-color LED includes a shell and a plurality of light-emitting chips arranged in the shell, and the plurality of light-emitting chips respectively generate light beams with different wavelength ranges.

The control component is configured to control the multi-color LED to output a light beam with a respective wavelength range within a period of time, and apply the outputted light beam to irradiate the reaction vessel that is placed at a test site and contains a test object. The test object is the sample or the mixed solution.

At least one test site is arranged between either of the two light source components and the receiving component. The receiving component is configured to acquire interferent test optical information and item test optical information after the light beam irradiates the test object.

The analysis component is configured to obtain an interferent test result of the test object according to the interferent test optical information, and obtain an item test result of the test object according to the interferent test result and the item test optical information.

The invention further provides a sample analysis device, which includes a test sample preparation apparatus, at least one multi-color LED, a control component, a receiving component, and an analysis component.

The test sample preparation apparatus is configured to prepare a test object, and dispense the test object into a reaction vessel. The test object is a sample or a mixed solution of the sample and a reagent, and the sample is a biological sample.

The at least one multi-color LED is configured to provide a light beam. The multi-color LED includes a shell and a plurality of light-emitting chips arranged in the shell. The plurality of light-emitting chips respectively generate light beams with different wavelength ranges.

The control component is configured to control the multi-color LED to output a light beam with a respective wavelength range within a period of time, and apply the outputted light beam to irradiate the reaction vessel that is placed at a test site and contains the test object.

The receiving component is configured to acquire optical information after the light beam irradiates the test object. The test site is arranged between the multi-color LED and the receiving component, and the test site is configured to place the reaction vessel containing the test object.

The analysis component is configured to obtain an analysis result of the test object according to the optical information.

The invention further provides a sample analysis method, which includes the following operations.

A test object is dispensed into a reaction vessel. The test object is a sample or a mixed solution of the sample and a reagent. The reaction vessel containing the test object is placed at a test site.

A multi-color LED configured to provide a light beam is controlled to output the light beam with a respective wavelength range within a period of time and the outputted light beam is applied to irradiate the reaction vessel that is placed at the test site and contains the test object. The multi-color LED includes a shell and a plurality of light-emitting chips arranged in the shell, and the plurality of light-emitting chips respectively generate light beams with different wavelength ranges.

Interferent test optical information and item test optical information are acquired after the light beam irradiates the test object.

An interferent test result of the test object is acquired according to the interferent test optical information. An item test result of the test object is acquired according to the interferent test result and the item test optical information.

The invention further provides a sample analysis method, which includes the following operations.

A test object is dispensed into a reaction vessel. The test object is a sample or a mixed solution of the sample and a reagent. The reaction vessel containing the test object is placed at a test site.

A light beam outputted from a light source component is controlled to irradiate the reaction vessel that is placed at the test site and contains the test object. The light source component includes two light source components, at least one of the two light source components is a multi-color LED, the multi-color LED includes a shell and a plurality of light-emitting chips arranged in the shell, the plurality of light-emitting chips respectively generate light beams with different wavelength ranges, and the multi-color LED outputs a light beam with a respective wavelength range within a period of time.

Interferent test optical information and item test optical information are acquired after the light beam irradiates the test object.

An interferent test result of the test object is obtained according to the interferent test optical information. An item test result of the test object is obtained according to the interferent test result and the item test optical information.

The invention further provides a sample analysis method, which includes the following operations.

A test object is dispensed into a reaction vessel. The test object is a sample or a mixed solution of the sample and a reagent. The sample is a biological sample. The reaction vessel containing the test object is placed at a test site.

A multi-color LED configured to provide a light beam is controlled to output the light beam with a respective wavelength range within a period of time and the outputted light beam is applied to irradiate the reaction vessel that is placed at the test site and contains the test object. The multi-color LED includes a shell and a plurality of light-emitting chips arranged in the shell, and the plurality of light-emitting chips respectively generate light beams with different wavelength ranges.

Optical information is acquired after the light beam irradiates the test object.

An analysis result of the test object is obtained according to the optical information.

It can be seen from the abovementioned technical solution that the sample analysis device provided by the invention adopts the multi-color LED to provide the light beam. The multi-color LED includes the shell and the plurality of light-emitting chips arranged in the shell, and the plurality of light-emitting chips can respectively generate light beams with different wavelength ranges. Under the control of the control component, the multi-color LED outputs the light beam with a respective wavelength range within a period of time, and the outputted light beam is applied to irradiate the reaction vessel containing the test object. The test object is the sample or the mixed solution. The receiving component acquires the interferent test optical information and the item test optical information after the light beam irradiates the test object. The analysis component is configured to obtain an interferent test result of the test object according to the interferent test optical information. The analysis component is further configured to obtain an item test result of the test object according to the interferent test result and the item test optical information. With the abovementioned arrangement, the multi-color LED can emit the light beams with different wavelength ranges for the test sites, so as to realize a use of the light beams with different wavelength ranges in different methods, which effectively avoids the operation of arranging a plurality of LEDs, and also avoids the need of setting a shaping component for coupling each of the plurality of LEDs into the optical fiber, thereby realizing a compact design.

### BRIEF DESCRIPTION OF THE DRAWINGS

In order to more clearly illustrate the embodiments of the invention or the technical solutions in the related art, the drawings used in the description of the embodiments or the related art will be briefly described below. It is apparent that the drawings in the following description are only some embodiments of the invention, and other drawings can be obtained by those skilled in the art according to these drawings without any creative efforts.
FIG. 1 illustrates a schematic structural diagram of a sample analysis device according to an embodiment of the invention.
FIG. 2 illustrates a schematic structural diagram of a multi-color LED according to an embodiment of the invention.
FIG. 3 illustrates a spectrum distribution diagram of a multi-color LED according to an embodiment of the invention.
FIG. 4 illustrates a first specific schematic structural diagram of a sample analysis device according to an embodiment of the invention.
FIG. 5 illustrates a second specific schematic structural diagram of a sample analysis device according to an embodiment of the invention.
FIG. 6 illustrates a third specific schematic structural diagram of a sample analysis device according to an embodiment of the invention.
FIG. 7 illustrates a fourth specific schematic structural diagram of a sample analysis device according to an embodiment of the invention.

### DETAILED DESCRIPTION

The invention discloses a sample analysis device to realize a compact design.

Technical solutions in the embodiments of the invention will be clearly and completely described below with reference to the accompanying drawings in the embodiments of the invention. Apparently, the described embodiments are merely part rather than all of the embodiments of the invention. On the basis of the embodiments of the invention, all other embodiments obtained by those of ordinary skill in the art without creative work shall fall within the scope of protection of the invention.

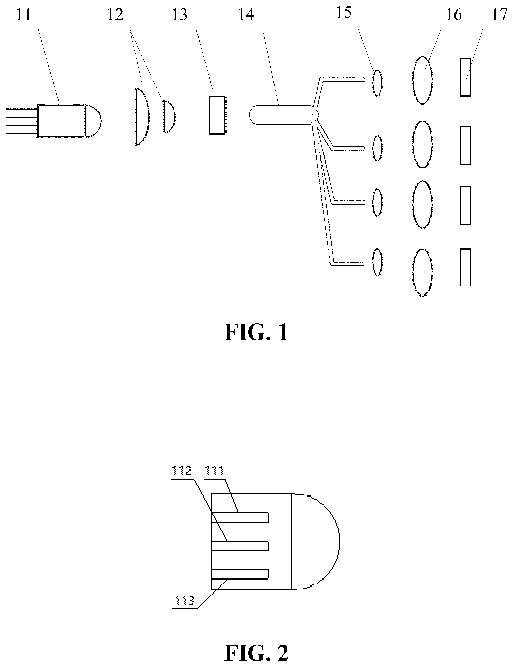

As shown in FIG. 1, an embodiment of the invention provides a sample analysis device, which includes a sample apparatus, a reagent apparatus, a sample loading apparatus, a reagent dispensing apparatus, a control component, a receiving component 17, an analysis component, and a multi-color LED 11 configured to provide a light beam.

The sample apparatus is configured to carry a sample vessel loaded with a sample. In some implementations, the sample apparatus may include a Sample Delivery Module (SDM) and a front-end track. In some other implementations, the sample apparatus may also be a sample tray. The sample tray includes a plurality of sample sites where sample vessels may be placed. The sample tray may schedule a sample to a corresponding position (for example, a position for the sample loading apparatus to suck the sample) by rotating a tray structure thereof.

The reagent apparatus is configured to carry a reagent vessel loaded with a reagent. In an implementation, the reagent apparatus is arranged in a disc structure. The reagent apparatus has a plurality of sites configured to carry reagent vessels. The reagent apparatus can rotate and drive the reagent vessels carried therein to rotate, and is configured to rotate the reagent vessels to reagent sucking positions for the reagent dispensing apparatus to suck reagents. There may be one or more reagent apparatuses.

The sample loading apparatus is configured to suck the sample from the sample vessel and dispense the sample into a reaction vessel. The sample loading apparatus is configured to suck the sample and discharge the sample into a vessel to be loaded with the sample. In some implementations, the sample loading apparatus may include a sample probe. The sample probe performs two-dimensional or three-dimensional movement in space through a two-dimensional or three-dimensional driving mechanism, so that the sample probe can move to suck the sample carried by the sample apparatus, move to a position of a vessel to be loaded with the sample, and discharge the sample into the vessel.

The reagent dispensing apparatus is configured to suck the reagent from the reagent vessel and dispense the reagent into the reaction vessel. The sample and the reagent form a mixed solution. In some implementations, the reagent dispensing apparatus may include a reagent probe. The reagent probe performs two-dimensional or three-dimensional movement in space through a two-dimensional or three-dimensional driving mechanism, so that the reagent probe can move to suck the reagent carried by the reagent apparatus, move to a position of a vessel to be added with the reagent, and discharge the reagent into the vessel.

In some embodiments, the sample loading apparatus and the reagent dispensing apparatus may share a set of driving mechanism and probe. When the sample loading apparatus and the reagent dispensing apparatus share the set of driving mechanism and probe, the probe needs to be cleaned well to avoid the problems of cross contamination and the like when the sample and the reagent are sucked.

The multi-color LED 11 includes a shell and a plurality of light-emitting chips arranged in the shell. The plurality of light-emitting chips can respectively generate light beams with different wavelength ranges. The control component is configured to control the multi-color LED 11 to output a light beam with a respective wavelength range within a period of time, and apply the outputted light beam to irradiate a reaction vessel 16 containing a test object. The test object is the sample or the mixed solution.

The receiving component 17 is configured to acquire interferent test optical information and item test optical information after the light beam irradiates the test object. At least one test site is arranged between the multi-color LED 11 and the receiving component 17, and the test site is configured to place the reaction vessel 16 containing the test object. The analysis component is configured to obtain an interferent test result of the test object according to the interferent test optical information, and obtain an item test result of the test object according to the interferent test result and the item test optical information.

The reaction vessel 16 may be a reaction cup, a cuvette, or the like.

In the sample analysis device provided by the embodiments of the invention, the multi-color LED11 is adopted to provide the light beam. Since the multi-color LED 11 includes the shell and the plurality of light-emitting chips arranged in the shell, the plurality of light-emitting chips can respectively generate the light beams with different wavelength ranges. Under the control of the control component, the multi-color LED 11 outputs the light beam with a respective wavelength range within a period of time, and apply the outputted light beam to irradiate the reaction vessel 16 containing the test object. The test object is the sample or the mixed solution. The receiving component 17 acquires the interferent test optical information and the item test optical information after the light beam irradiates the test object. The analysis component is configured to obtain the interferent test result of the test object according to the interferent test optical information. In addition, the analysis component is configured to obtain the item test result of the test object according to the interferent test result and the item test optical information. Through the abovementioned arrangement, the multi-color LED 11 can emit the light beams with different wavelength ranges to the test sites, so as to realize the use of the light beams with different wavelength ranges in different methods, which effectively avoids the operation of arranging a plurality of LEDs, and also avoids the need of setting a shaping component required for coupling each of the plurality of LEDs into the optical fiber, thereby realizing a compact design.

As shown in FIG. 2, in the present embodiment, the multi-color LED is preferably a three-color LED. A three-color LED module mainly integrates three light-emitting chips that can emit the light beams with different wavelength ranges into one shell. The three light-emitting chips include a first light-emitting chip 111, a second light-emitting chip 112, and a third light-emitting chip 113. The light-emitting chips are LED chips.

In the embodiment, in order meet the wavelength requirements for interferent test, the wavelength ranges of the light beams emitted by the three light-emitting chips are 395 nm to 425 nm, 525 nm to 590 nm, and 640 nm to 800 nm, respectively. It can be known that the wavelength ranges of any two of the light beams within the three wavelength ranges generated by the first light-emitting chip 111, the second light-emitting chip 112, and the third light-emitting chip 113 do not overlap. The wavelength ranges of the light beams emitted by the abovementioned three light-emitting chips may also be other numerical ranges, and the specific wavelength ranges are determined according to actual sample analysis requirements. No specific limitations are made herein.

In an optical determination of blood coagulation, the light beams in the abovementioned three wavelength ranges correspond to three test methodologies, that is, a chromogenic substrate assay, an immunoturbidimetric assay, and a coagulation assay, respectively.

The chromogenic substrate assay usually uses violet light or ultraviolet light with a wavelength of 395 nm to 425 nm, and the chromogenic substrate assay is usually used for testing items such as Antithrombin-III (AT-III or AT3). The immunoturbidimetric assay usually uses green-yellow light with a wavelength of 525 nm to 590 nm, and the immunoturbidimetric assay is usually used for testing items such as D-dimer (DD) and fibrin/fibrinogen degradation product (FDP). The coagulation assay usually uses red or infrared light with a wavelength of 640 nm to 800 nm, and the coagulation assay is usually used for testing items such as Prothrombin Time (PT), Activated Partial Thromboplastin Time (APTT), Thrombin Time (TT), and Fibrinogen (FIB).

The sample analysis device provided by the embodiments of the invention further includes a filter component 13 arranged in a light beam transmission path. The filter component 13 is configured to filter out the ambient light when the light beam is transmitted in the light beam transmission path. In addition, the filter component 13 can also regulate the wavelength range of the light beam outputted from the multi-color LED from a first wavelength range to a second wavelength range. The first wavelength range is greater than the second wavelength range. A starting point of the light beam transmission path is at the multi-color LED, and an end point of the light beam transmission path is at the receiving component 17. The abovementioned wavelength ranges (395 nm to 425 nm, 525 nm to 590 nm, and 640 nm to 800 nm) may be set as the first wavelength range, or may also be set as the second wavelength range. No specific limitations are made herein.

Preferably, the filter component 13 is a multi-band pass filter.

Further, a lens group 12 is also arranged between the multi-color LED 11 and the filter component 13.

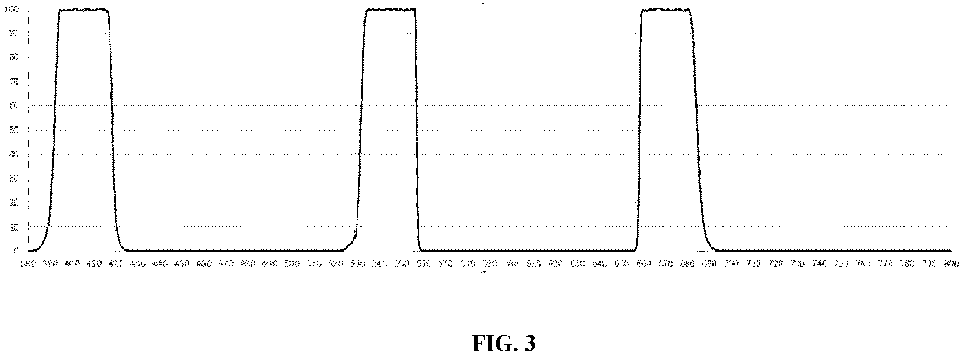

In the present embodiment, since the multi-color LED 11 is the three-color LED, the filter component 13 is a three-band pass filter. The three-band pass filter can ensure that the light in only three spectral bands is received by the receiving component 17, while the light in other spectral bands is filtered out, so as to reduce the impact on a test. The three transmission spectral bands each corresponds to a central wavelength of a previous monochrome LED, and the transmission spectrum thereof is shown in FIG. 3. The horizontal axis represents the wavelength (unit: nm), and the vertical axis represents the transmittance (unit: %). That is, in the present embodiment, the light beams of the three light-emitting chips are in the first wavelength range, which is regulated to the second wavelength range after passing through the three-band pass filter. The wavelength ranges of the first light-emitting chip 111, the second light-emitting chip 112, and the third light-emitting chip 113 are 395 nm to 425 nm, 525 nm to 590 nm, and 640 nm to 800 nm, respectively.

No matter the chromogenic substrate assay, the immunoturbidimetric assay, and the coagulation assay, in the optical determination of blood coagulation, when there is an interferent in the sample, the test will be interfered. For example, when there are interferents such as hemoglobin, bilirubin, and chyle in a plasma sample, the sample test will be interfered because these interferents can absorb light strongly. Generally, the hemoglobin, the bilirubin, and the chyle may be called HIL interference, herein H refers to hemoglobin, I refers to bilirubin, and L refers to chyle.

The analysis component is configured to obtain the interferent test result of the test object according to the interferent test optical information, and obtain the item test result of the test object according to the interferent test result and the item test optical information. In a specific operation process, the light in a wave band that cannot be absorbed by the interferents in the sample is provided for test.

Then, the item test result of the test object is obtained according to the interferent test result and the item test optical information.

In a first item test process, the multi-color LED 11 outputs a light beam with a respective wavelength range within a period of time. After the first light-emitting chip 111 emits a light beam for a period of time, the first light-emitting chip 111 goes out; either of the second light-emitting chip 112 or the third light-emitting chip 113 goes out after emitting a light beam for a period of time; and the other of the second light-emitting chip 112 and the third light-emitting chip 113 goes out after emitting a light beam for a period of time. Through the abovementioned arrangement, the first light-emitting chip 111, the second light-emitting chip 112, and the third light-emitting chip 113 can emit light beams alternately. There are also three groups of item test optical information. The three groups of item test optical information are analyzed through the analysis component to obtain three groups of candidate item test results. The most suitable light beam for the item test is determined according to the interferent test result, a candidate item test result corresponding to the item test optical information obtained by the determined light beam is selected, and the candidate item test result is determined as the item test result.

In a second item test process, the multi-color LED 11 outputs a light beam with a respective wavelength range within a period of time. After the first light-emitting chip 111 emits a light beam for a period of time, the first light-emitting chip 111 goes out; either of the second light-emitting chip 112 or the third light-emitting chip 113 goes out after emitting a light beam for a period of time; and the other of the second light-emitting chip 112 and the third light-emitting chip 113 goes out after emitting a light beam for a period of time. Through the abovementioned arrangement, the first light-emitting chip 111, the second light-emitting chip 112, and the third light-emitting chip 113 can emit light beams alternately. The most suitable light beam for the item test is determined according to the interferent test result, and a light-emitting chip corresponding to the determined light beam is selected to emit a light beam, so that a group of item test optical information is obtained, and the analysis component analyzes the group of item test optical information to obtain the item test result of the test object.

The sample analysis device further includes a one-to-multiple optical fiber bundle 14. An optical input end of the one-to-multiple optical fiber bundle 14 is configured to receive a light beam. Each of a plurality of optical output ends of the one-to-multiple optical fiber bundle 14 corresponds to a respective one of at least two test sites. A light collimating lens 115 is arranged at each of the plurality of optical output ends of the one-to-multiple optical fiber bundle 14, so as to perform a collimating operation on the light beams passing through the one-to-multiple optical fiber bundle 14.

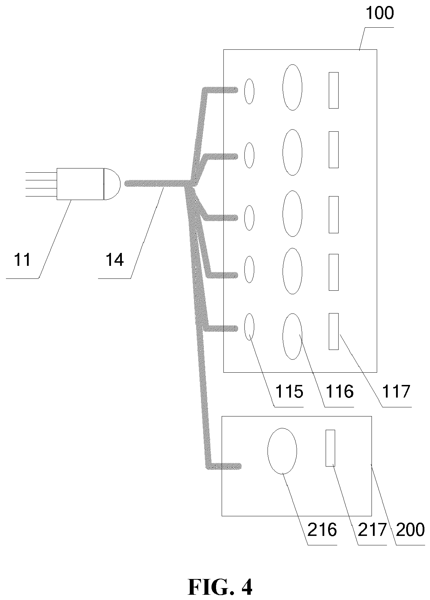

Further, as shown in FIG. 4, in a first embodiment, the sample analysis device includes a sample apparatus, a reagent apparatus, a sample loading apparatus, a reagent dispensing apparatus, a control component, a receiving component 17, an analysis component, and a multi-color LED 11 configured to provide a light beam.

The receiving component is configured to acquire interferent test optical information and item test optical information after the light beam irradiates the test object. At least one test site is arranged between the multi-color LED 11 and the receiving component, and the test site is configured to place the reaction vessel containing the test object. The analysis component is configured to obtain an interferent test result of the test object according to the interferent test optical information, and obtain an item test result of the test object according to the interferent test result and the item test optical information.

In one structure, the receiving component may be configured to acquire the interferent test optical information and the item test optical information from the same test site when the multi-color LED 11 irradiates the reaction vessel placed at test site. The reaction vessel at the test site at least contains the sample when the receiving component acquires the interferent test optical information. The reaction vessel at the test site contains the mixed solution when the receiving component acquires the item test optical information. The multi-color LED 11 irradiates the reaction vessel placed at the test site. The reaction vessel at the test site at least contains the sample. The receiving component acquires the interferent test optical information. After that, the reaction vessel at least containing the sample may be moved to an injection position of the reagent dispensing apparatus to dispense the reagent into the reaction vessel. The sample and the reagent in the reaction vessel form a mixed solution, and then the reaction vessel is moved back to the test site. The multi-color LED 11 irradiates the reaction vessel placed at the test site. The receiving component acquires the item test optical information.

The structure of the reagent dispensing apparatus may also be regulated, so that the reagent dispensing apparatus can directly dispense the reagent into the reaction vessel located at the test site after the receiving component acquires the interferent test optical information, and the sample and the reagent in the reaction vessel form the mixed solution.

In another structure, at least one test site includes at least one interferent test site and at least one item test site. The receiving component is configured to acquire the interferent test optical information from the interferent test site when the multi-color LED 11 irradiates the reaction vessel placed at the interferent test site, and acquires the item test optical information from the item test site when the multi-color LED 11 irradiates the reaction vessel placed at the item test site. The reaction vessel at the interferent test site at least contains the sample when the receiving component acquires the interferent test optical information. The reaction vessel at the item test site contains the mixed solution when the receiving component acquires the item test optical information. As shown in FIG. 4, in the present embodiment, the sample analysis device includes an interferent test assembly 200 and an item test assembly 100. Each of the interferent test assembly 200 and the item test assembly 100 includes a receiving component. The receiving component of the item test assembly 100 is an item test receiving component 117, and the receiving component of the interferent test assembly 200 is an interferent test receiving component 217. A reaction cup 116 (a reaction vessel) is placed at a test site between the multi-color LED 11 and the item test receiving component 117. A cuvette 216 (a reaction vessel) is placed at a test site between the multi-color LED 11 and the interferent test receiving component 217.

The interferent test receiving component 217 is configured to receive an output optical signal after the cuvette 216 is irradiated by the multi-color LED 11, so as to obtain the interferent test optical information of a sample to be tested. The interferent test optical information indicates whether an interferent in the sample to be tested exceeds a predetermined threshold or not. Therefore, from a perspective of a test process, the control component may be configured to control the sample loading apparatus to dispense part of the sample to be tested into the cuvette 216, and control the reagent dispensing apparatus to dispense a diluent into the cuvette 216 (or the diluent may also not be dispensed), so as to test an interferent in the sample at the interferent test site. Then, the control component may control the sample loading apparatus to dispense the remaining part of the sample to be tested into the reaction cup 116, and control the reagent dispensing apparatus to dispense a test reagent into the reaction cup 116, so as to test items for the sample at the item test site. The multi-color LED 11 can provide the light beam to multiple item test sites in sequence.

In order to simplify the structure, the sample analysis device further includes a one-to-multiple optical fiber bundle 14. The multi-color LED 11 may provide light beams for at least two test sites. Specifically, an optical input end of the one-to-multiple optical fiber bundle 14 is configured to receive a light beam of the multi-color LED 11. Each of a plurality of optical output ends of the one-to-multiple optical fiber bundle 14 corresponds to a respective one of the at least two test sites.

The one-to-multiple optical fiber bundle 14 is arranged, so as to facilitate the use of one multi-color LED 11 to provide light beams for the test site between the multi-color LED 11 and the item test receiving component 117 and the test site between the multi-color LED 11 and the interferent test receiving component 217.

According to the sample analysis device provided by the embodiments of the invention, the multi-color LED 11 is configured to provide the light beam, so that one multi-color LED 11 can be used to emit the light beams with different wavelength ranges for the test sites, so as to realize the use of the light beams with different wavelength ranges in different methods, which effectively avoids the operation of arranging a plurality of LEDs, and also avoids the need of setting a shaping component required for coupling each LED into the optical fiber, thereby realizing a compact design.

The control component is configured to control the light beams with different wavelength ranges emitted by the multi-color LED 11 to irradiate the test object in the reaction vessel within a preset duration after the reagent dispensing apparatus adds the reagent into the reaction vessel containing the sample, so that the receiving component acquires the interferent test optical information. The preset duration is related to a specific type of the reagent. The preset duration herein may be understood as the period of time after a reagent (such as a diluent, a mixed reagent, or a trigger reagent) is added and before a fibrin-bound fibrin polymer is formed. The preset duration can be preset according to experience. The reagent includes the diluent, the mixed reagent, and the trigger reagent.

Since the interferents, such as chyle, hemoglobin, and bilirubin, have respective absorption spectra, a plurality of light beams with different wavelengths may be used to irradiate to the test sample. After the test sample is irradiated by each light beam with a respective wavelength, a situation of a corresponding interferent, such as the content, is determined according to an absorbance value of the test sample. For example, the test sample may be irradiated by the light beams with a plurality of wavelengths, and the light beams with the respective wavelengths correspond to three interferents, i.e., the chyle, the hemoglobin, and the bilirubin, respectively, so that the situation of the corresponding interferent can be determined according to the absorbance value of the light beam with a respective wavelength. Therefore, in an embodiment, the light beams with more than one wavelength are applied to irradiate the test sample.

In an embodiment requiring pretest, the control component is configured to: control the light beams with different wavelength ranges emitted by the multi-color LED 11 to irradiate the test object in the reaction vessel at the test site after at least the sample is added into the reaction vessel, so that the receiving component acquires an interferent test optical information; obtain an interferent test result according to the interferent test optical information; and determine a wavelength range of a light beam for obtaining an item test result according to the interferent test result.

An embodiment of the invention further provides a sample analysis device, which includes two light source components. At least one of the two light source components is a multi-color LED. The multi-color LED includes a shell and a plurality of light-emitting chips arranged in the shell, and the plurality of light-emitting chips can respectively generate light beams with different wavelength ranges.

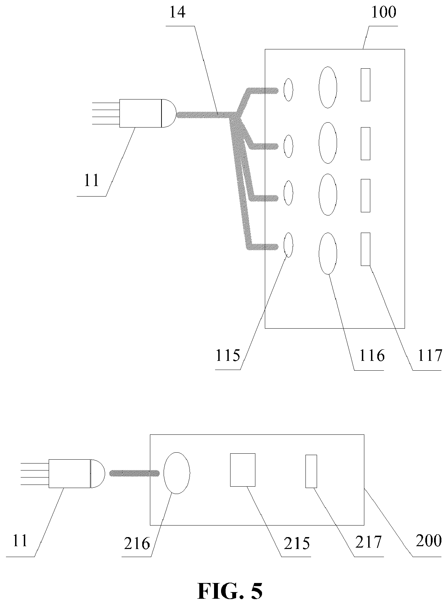

As shown in FIG. 5, in a second embodiment, the sample analysis device includes a sample apparatus, a reagent apparatus, a sample loading apparatus, a reagent dispensing apparatus, a control component, a receiving component 17, an analysis component, and two light source components. At least one of the two light source components is a multi-color LED 11. The multi-color LED 11 includes a shell and a plurality of light-emitting chips arranged in the shell. The plurality of light-emitting chips can respectively generate the light beams with different wavelength ranges. The other light source component is also a multi-color LED. An LED light source of the other light source component includes a shell and a plurality of light-emitting chips arranged in the shell. The plurality of light-emitting chips can respectively generate light beams with different wavelength ranges.

In the present embodiment, the test site includes at least one interferent test site and at least one item test site. One of the two light source components is the multi-color LED 11, and the other light source component is another multi-color LED 11. The other light source component includes a shell and a plurality of light-emitting chips arranged in the shell, and the plurality of light-emitting chips can respectively generate light beams with different wavelength ranges. The interferent test site is arranged between one light source component and the receiving component. The item test site is arranged between the other light source component and another receiving component. That is, in the present embodiment, the sample analysis device includes an interferent test assembly 200 and an item test assembly 100. Each of the interferent test assembly 200 and the item test assembly 100 includes a receiving component. The receiving component of the item test assembly 100 is an item test receiving component 117, and the receiving component of the interferent test assembly 200 is an interferent test receiving component 217. A reaction cup 116 (a reaction vessel) is arranged at the item test site between the multi-color LED 11 and the item test receiving component 117. A cuvette 216 (a reaction vessel) is arranged at the interferent test site between the other multi-color LED 11 and the interferent test receiving component 217.

In addition, the interferent test site is arranged between one multi-color LED 11 and the receiving component.

The sample analysis device further includes a one-to-multiple optical fiber bundle 14. The item test assembly 100 has a plurality of item test sites. The one-to-multiple optical fiber bundle 14 may provide light beams for at least two item test sites. Specifically, an optical input end of the one-to-multiple optical fiber bundle 14 is configured to receive a light beam of the multi-color LED 11 (one light source component). Each of a plurality of optical output ends of the one-to-multiple optical fiber bundle 14 corresponds to a respective one of the at least two item test sites.

The sample analysis device further includes a three-band pass filter 215. Preferably, the three-band pass filter 215 is located at one side, close to the interferent test receiving component 217, of the cuvette 216, so as to perform a filter operation on a light beam transmitting through the cuvette 216. The light beam after the filter operation is directly received by the interferent test receiving component 217, which effectively improves test accuracy.

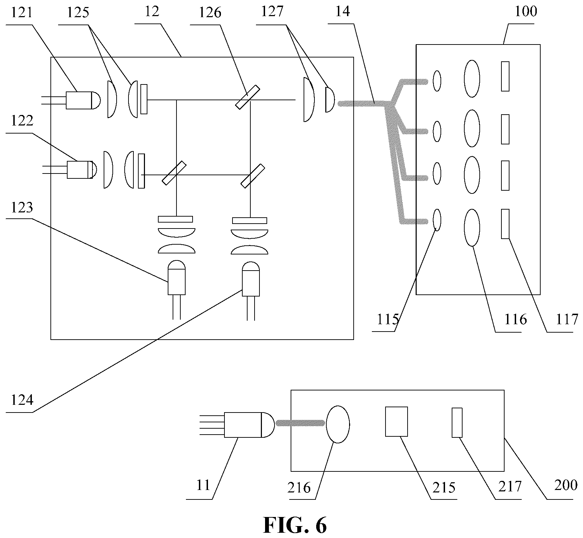

As shown in FIG. 6, in a third embodiment, the sample analysis device includes a sample apparatus, a reagent apparatus, a sample loading apparatus, a reagent dispensing apparatus, a control component, a receiving component 17, an analysis component, and two light source components. One of the two light source components is a multi-color LED 11. The multi-color LED 11 includes a shell and a plurality of light-emitting chips arranged in the shell. The plurality of light-emitting chips can respectively generate light beams with different wavelength ranges. The other light source component is a light source combination structure 12 having a plurality of monochromatic LEDs. Each monochromatic LED in the light source combination structure 12 can generate a light beam with a respective wavelength range, and the wavelength ranges of the light beams generated by different monochromatic LEDs are different. The interferent test site is arranged between the multi-color LED 11 and the receiving component. The item test site is arranged between the light source combination structure 12 and another receiving component. The plurality of monochromatic LEDs in the light source combination structure 12 are respectively an infrared LED 121, a violet LED 122, a green LED 123, and a red LED 124. The light source combination structure 12 further includes a collimating lens 125, a dichroic mirror 126, and a focusing coupling lens 127. The item test sites are arranged between the light source combination structure 12 and the item test receiving component 117. There are at least two item test sites.

The sample analysis device further includes a one-to-multiple optical fiber bundle 14. An optical input end of the one-to-multiple optical fiber bundle 14 is configured to receive a light beam. Each of a plurality of optical output ends of the one-to-multiple optical fiber bundle 14 corresponds to a respective one of at least two item test sites. A light collimating lens 115 is arranged at each of the plurality of optical output ends of the one-to-multiple optical fiber bundle 14, so as to perform a collimating operation on the light beam passing through the one-to-multiple optical fiber bundle 14.

In the present embodiment, the item test assembly 100 is arranged corresponding to the light source combination structure 12. The light beams emitted from the plurality of monochromatic LEDs reach the focusing coupling lens 127 through the collimating lens 125 and the dichroic mirror 126, and light beams are provided for the at least two item test sites through the one-to-multiple optical fiber bundle 14.

In one structure, the receiving component may be configured to acquire the interferent test optical information and the item test optical information from the same test site when the light source component irradiates the reaction vessel placed at the test site, and acquire other item test optical information from other test sites. The reaction vessel at the test site at least contains the sample when the receiving component acquires the interferent test optical information. The reaction vessel at the test site contains a mixed solution when the receiving component acquires the item test optical information. In the present embodiment, the interferent test optical information and the item test optical information may be acquired by the interferent test receiving component 217 in FIG. 6 at the same test site. Of course, the reaction cup 116 may also be placed at the test site in FIG. 6.

At least one of the at least two test sites is an interferent test site, and other test sites are item test sites. The receiving component is configured to acquire the interferent test optical information from the interferent test site when the light source component irradiates the reaction vessel placed at the interferent test site, and acquires the item test optical information from the item test site when the light source component irradiates the reaction vessel placed at the item test site. The reaction vessel at the interferent test site at least contains the sample when the receiving component acquires the interferent test optical information. The reaction vessel at the item test site contains the mixed solution when the receiving component acquires the item test optical information. As shown in FIG. 6, in the present embodiment, the sample analysis device includes an interferent test assembly 200 and an item test assembly 100. Each of the interferent test assembly 200 and the item test assembly 100 includes a receiving component. The receiving component of the item test assembly 100 is an item test receiving component 117, and the receiving component of the interferent test assembly 200 is an interferent test receiving component 217. A reaction cup 116 (a reaction vessel) is arranged at a test site between the light source combination structure 12 and the item test receiving component 117. A cuvette 216 (a reaction vessel) is arranged at a test site between the multi-color LED 11 and the interferent test receiving component 217.

The interferent test receiving component 217 is configured to receive an output optical signal after the cuvette 216 is irradiated by the multi-color LED 11, so as to obtain the interferent test optical information of a sample to be tested. The interferent test optical information indicates whether an interferent in the sample to be tested exceeds a predetermined threshold or not. Therefore, from a perspective of a test process, the control component may be configured to control the sample loading apparatus to dispense part of the sample to be tested into the cuvette 216, and control the reagent dispensing apparatus to dispense a diluent into the cuvette 216 (or the diluent may also not be dispensed), so as to test an interferent in the sample at the interferent test site. Then, the control component may control the sample loading apparatus to dispense the remaining part of the sample to be tested into the reaction cup 116, and control the reagent dispensing apparatus to dispense a test reagent into the reaction cup 116, so as to test items for the sample at the item test site.

The control component is configured to control the light beams with different wavelength ranges emitted by the multi-color LED 11 to irradiate the test object in the reaction vessel within a preset duration after the reagent dispensing apparatus adds the reagent into the reaction vessel containing the sample, so that the receiving component acquires the interferent test optical information. The preset duration is related to a specific type of the reagent. The preset duration herein may be understood as the period of time after a reagent (such as a diluent, a mixed reagent, or a trigger reagent) is added and before a fibrin-bound fibrin polymer is formed. The preset duration can be preset according to experience. The reagent includes the diluent, the mixed reagent, and the trigger reagent.

Since the interferents, such as chyle, hemoglobin, and bilirubin, have respective absorption spectra, a plurality of light beams with different wavelengths may be used to irradiate the test sample. After the test sample is irradiated by each light beam with a respective wavelength, the situation of the corresponding interferent, such as the content, is determined according to an absorbance value of the test sample. For example, the test sample may be irradiated by the light beams with a plurality of wavelengths. The light beams with the respective wavelengths correspond to three interferents, i.e., the chyle, the hemoglobin, and the bilirubin, respectively, so that the situation of the corresponding interferent can be determined according to the absorbance value of the light beam with a respective wavelength. Therefore, in an embodiment, the light beams with more than one wavelength are applied to irradiate the test sample.

In an embodiment requiring pretest, the control component is configured to: control the light source component to apply the light beam to irradiate the reaction vessel at the test site after at least the sample is added into the reaction vessel, so that the receiving component acquires the interferent test optical information; obtain the interferent test result according to the interferent test optical information; and determine a wavelength range of a light beam for obtaining the item test result according to the interferent test result.

The sample analysis device further includes a three-band pass filter 215. Preferably, the three-band pass filter 215 is located at one side, close to the interferent test receiving component 217, of the cuvette 216, so as to perform a filter operation on a light beam transmitting through the cuvette 216. The light beam after the filter operation is directly received by the interferent test receiving component 217, which effectively improves the test accuracy.

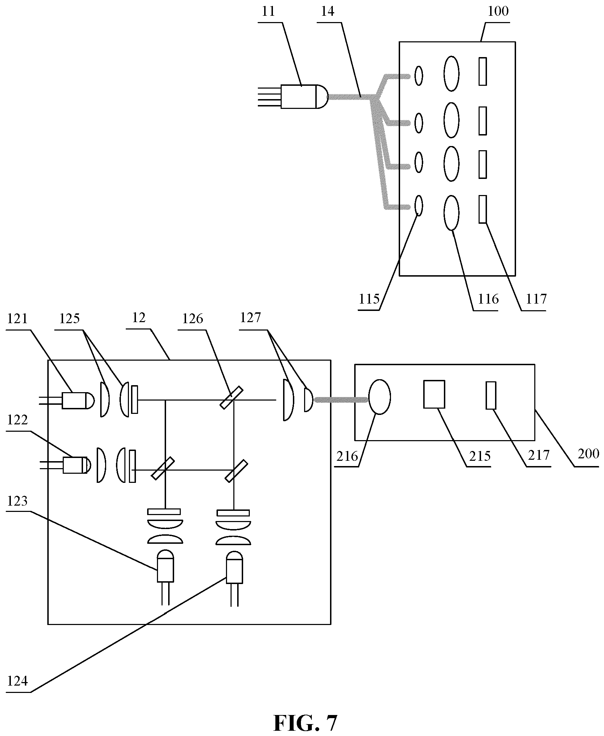

As shown in FIG. 7, in a fourth embodiment, the sample analysis device includes a sample apparatus, a reagent apparatus, a sample loading apparatus, a reagent dispensing apparatus, a control component, a receiving component 17, an analysis component, and two light source components. One of the two light source components is a multi-color LED 11. The multi-color LED 11 includes a shell and a plurality of light-emitting chips arranged in the shell. The plurality of light-emitting chips can respectively generate light beams with different wavelength ranges. The other light source component is a light source combination structure 12 having a plurality of monochromatic LEDs. Each monochromatic LED in the light source combination structure 12 can generate a light beam with a respective wavelength range, and the wavelength ranges of the light beams generated by different monochromatic LEDs are different. An interferent test site is arranged between the light source combination structure 12 and a receiving component. An item test site is arranged between the multi-color LED 11 and another receiving component. The plurality of monochromatic LEDs in the light source combination structure 12 are respectively an infrared LED 121, a violet LED 122, a green LED 123, and a red LED 124. The light source combination structure 12 further includes a collimating lens 125, a dichroic mirror 126, and a focusing coupling lens 127. The item test site is arranged between the multi-color LED 11 and an item test receiving component 117. There are at least two item test sites. As shown in FIG. 7, in the present embodiment, the sample analysis device includes an interferent test assembly 200 and an item test assembly 100. Each of the interferent test assembly 200 and the item test assembly 100 includes a receiving component. The receiving component of the item test assembly 100 is the item test receiving component 117, and the receiving component of the interferent test assembly 200 is an interferent test receiving component 217. A reaction cup 116 (a reaction vessel) is arranged at a test site between the multi-color LED 11 and the item test receiving component 117. A cuvette 216 (a reaction vessel) is arranged at a test site between the light source combination structure 12 and the interferent test receiving component 217.

The sample analysis device further includes a one-to-multiple optical fiber bundle 14. An optical input end of the one-to-multiple optical fiber bundle 14 is configured to receive a light beam. Each of a plurality of optical output ends of the one-to-multiple optical fiber bundle 14 corresponds to a respective one of the at least two item test sites. A light collimating lens 115 is arranged at each of the plurality of optical output ends of the one-to-multiple optical fiber bundle 14, so as to perform a collimating operation on the light beam passing through the one-to-multiple optical fiber bundle 14.

In the present embodiment, the item test assembly 100 is arranged corresponding to the multi-color LED 11. The light beam emitted from the multi-color LED 11 can provide light beams for at least two item test sites through the one-to-multiple optical fiber bundle 14.

The sample analysis device further includes a three-band pass filter 215. Preferably, the three-band pass filter 215 is located at one side, close to the interferent test receiving component 217, of the cuvette 216, so as to perform a filter operation on a light beam transmitting through the cuvette 216. The light beam after the filter operation is directly received by the interferent test receiving component 217, which effectively improves the test accuracy.

An embodiment of the invention further provides a sample analysis device, which includes a test sample preparation apparatus, at least one multi-color LED configured to provide a light beam, a control component, a receiving component, and an analysis component. The test sample preparation apparatus is configured to prepare a test object, and dispense the test object into the reaction vessel. The test object may be a sample or the test object may be a mixed solution of the sample and a reagent, and the sample is a biological sample. The multi-color LED includes a shell and a plurality of light-emitting chips arranged in the shell. The plurality of light-emitting chips may respectively generate light beams with different wavelength ranges. The control component is configured to control the multi-color LED to output a light beam with a respective wavelength range within a period of time, and apply the outputted light beam to irradiate the reaction vessel that is located at the test site and contains the test object. The receiving component is configured to acquire optical information after the light beam irradiates the test object. The test site is arranged between the multi-color LED and the receiving component, and the test site is configured to place the reaction vessel containing the test object. The analysis component is configured to obtain an analysis result of the test object according to the optical information.

The sample analysis device provided by the embodiment of the invention has the same technical effects as the abovementioned sample analysis device, which will not be elaborated herein.

An embodiment of the invention further provides a sample analysis method, which includes the following operations.

A test object is dispensed into a reaction vessel. The test object is a sample or the test object is a mixed solution of the sample and a reagent. The reaction vessel containing the test object is placed at a test site.

A multi-color LED configured to provide a light beam is controlled to output the light beam with a respective wavelength range within a period of time and apply the outputted light beam to irradiate the reaction vessel that is placed at the test site and contains the test object. The multi-color LED includes a shell and a plurality of light-emitting chips arranged in the shell, and the plurality of light-emitting chips can respectively generate light beams with different wavelength ranges.

Interferent test optical information and item test optical information are acquired after the light beam irradiates the test object.

An interferent test result of the test object is obtained according to the interferent test optical information. An item test result of the test object is obtained according to the interferent test result and the item test optical information.

The sample analysis method provided by the embodiment of the invention has the same technical effects as that mentioned above, which will not be elaborated herein.

In order to acquire the interferent test optical information and the item test optical information at the same test site, the interferent test optical information and the item test optical information are acquired from the same test site when the multi-color LED irradiates the reaction vessel placed at the test site. The reaction vessel at the test site at least contains the sample when the interferent test optical information is acquired. The reaction vessel at the test site contains the mixed solution when the item test optical information is acquired.

In an embodiment, at least one test site may also include at least one interferent test site and at least one item test site. The interferent test optical information is acquired from the interferent test site when the multi-color LED irradiates the reaction vessel placed at the interferent test site, and the item test optical information is acquired from the item test site when the multi-color LED irradiates the reaction vessel placed at the item test site. The reaction vessel at the interferent test site at least contains the sample when the interferent test optical information is acquired. The reaction vessel at the item test site contains the mixed solution when the item test optical information is acquired.

In an embodiment, the light beams with different wavelength ranges emitted by the multi-color LED are controlled to irradiate the test object in the reaction vessel within a preset duration after a reagent is added into the reaction vessel containing the sample, so as to acquire the interferent test optical information.

In another embodiment, the light beams with different wavelength ranges emitted by the multi-color LED are controlled to irradiate the test object in the reaction vessel at the test site after at least the sample is added into the reaction vessel, so as to acquire the interferent test optical information. An interferent test result is obtained according to the interferent test optical information, and the wavelength range of the light beam for obtaining the item test result is determined according to the interferent test result. An operation of pretesting is realized through the abovementioned arrangement.

An embodiment of the invention further provides a sample analysis method, which includes the following operations. A test object is dispensed into a reaction vessel, herein the test object is a sample or the test object is a mixed solution of the sample and a reagent, and the reaction vessel containing the test object is placed at a test site. Light beams outputted from the light source components are controlled to irradiate the reaction vessel that is placed at the test site and contains the test object, herein there are two light source components, and at least one of the two light source components is a multi-color LED. The multi-color LED includes a shell and a plurality of light-emitting chips arranged in the shell. The plurality of light-emitting chips can respectively generate light beams with different wavelength ranges, and the multi-color LED can output a light beam with a respective wavelength range within a period of time. Interferent test optical information and item test optical information are acquired after the light beams irradiate the test object. An interferent test result of the test object is obtained according to the interferent test optical information, and an item test result of the test object is obtained according to the interferent test result and the item test optical information.

The sample analysis method provided by the embodiment of the invention has the same technical effects as that mentioned above, which will not be elaborated herein.

Further, the test site includes at least one interferent test site and at least one item test site. One of the two light source components is the multi-color LED, the other light source component is a multi-color LED. The other light source component includes a shell and a plurality of light-emitting chips arranged in the shell, and the plurality of light-emitting chips can respectively generate light beams with different wavelength ranges. The light beam outputted from one light source component is controlled to irradiate the reaction vessel that is placed at the interferent test site and contains a test object. The light beam outputted from the other light source component is controlled to irradiate the reaction vessel that is placed at the item test site and contains a test object.

In an embodiment, the test site may include at least one interferent test site and at least one item test site. One of the two light source components is a multi-color LED, and the other light source component is a light source combination structure having a plurality of monochromatic LEDs. Each monochromatic LED in the light source combination structure can generate a light beam with a respective wavelength range, and the wavelength ranges of the light beams generated by different monochromatic LEDs are different. The light beam outputted from one light source component is controlled to irradiate the reaction vessel that is placed at the interferent test site and contains a test object. The light beam outputted from the other light source component is controlled to irradiate the reaction vessel that is placed at the item test site and contains a test object.

In order to facilitate the transmission of the light beam, a one-to-multiple optical fiber bundle is incorporated. The light beam outputted from the light source combination structure irradiates the reaction vessel that is placed at the item test site and contains a test object. There are at least two item test sites. The light beam outputted from the light source combination structure is received by an optical input end of the one-to-multiple optical fiber bundle, and is transmitted to the at least two item test sites through a plurality of optical output ends of the one-to-multiple optical fiber bundle. Each of the plurality of optical output ends of the one-to-multiple optical fiber bundle corresponds to a respective one of the at least two item test sites.

In a first embodiment, when the light source component irradiates the reaction vessel placed at the test site, the interferent test optical information and the item test optical information are acquired from the same test site, and other item test optical information is acquired from other test sites.

When the interferent test optical information is acquired, the reaction vessel at the test site at least contains the sample. When the item test optical information is acquired, the reaction vessel at the test site contains a mixed solution.

In the second embodiment, at least one of the at least two test sites is an interferent test site, and other test sites are item test sites. The interferent test optical information is acquired from the interferent test site when the light source component irradiates the reaction vessel placed at the interferent test site, and the item test optical information is acquired from the item test site when the light source component irradiates the reaction vessel placed at the item test site. The reaction vessel at the interferent test site at least contains the sample when the interferent test optical information is acquired. The reaction vessel at the item test site contains the mixed solution when the item test optical information is acquired.

Further, the light source component is controlled to irradiate the reaction vessel within a preset duration after a reagent is added into the reaction vessel containing the sample, so that the receiving component acquires the interferent test optical information.

Alternatively, the light source component may also be controlled to apply a light beam to irradiate the reaction vessel at the test site after at least the sample is added into the reaction vessel, so as to acquire interferent test optical information. An interferent test result is obtained according to the interferent test optical information, and a wavelength range of a light beam for obtaining an item test result is determined according to the interferent test result. Through the abovementioned arrangement, a pretesting function is realized.

An embodiment of the invention further provides a sample analysis method, which includes the following operations. A test object is dispensed into a reaction vessel, herein the test object is a sample or the test object is a mixed solution of the sample and a reagent, the sample is a biological sample, and the reaction vessel containing the test object is placed at a test site. A multi-color LED configured to provide a light beam is configured to output the light beam with a respective wavelength range within a period of time and apply the outputted light beam to irradiate the reaction vessel that is placed at the test site and contains the test object. The multi-color LED includes a shell and a plurality of light-emitting chips arranged in the shell, and the plurality of light-emitting chips can respectively generate light beams with different wavelength ranges. Optical information is acquired after the light beam irradiates the test object. An analysis result of the test object is obtained according to the optical information.

The sample analysis method provided by the embodiment of the invention has the same technical effects as that mentioned above, which will not be elaborated herein.

Various embodiments in the present specification are described in a progressive manner. Each embodiment focuses on differences from other embodiments, and the same and similar parts of various embodiments may be referred to one another.

The abovementioned description for the disclosed embodiments enables those skilled in the art to implement or use the invention. Various modifications made to these embodiments will be apparent to those skilled in the art, and the general principles defined herein may be implemented in other embodiments without departing from the spirit or scope of the invention. Therefore, the invention will not be limited to these embodiments shown herein, but will conform to the widest scope consistent with the principles and novel features disclosed herein.

### EXAMPLES

1. A sample analysis device, comprising:
   a sample apparatus, configured to carry a sample vessel loaded with a sample;
   a reagent apparatus, configured to carry a reagent vessel loaded with a reagent;
   a sample loading apparatus, configured to aspirate the sample from the sample vessel and dispense the sample into a reaction vessel;
   a reagent dispensing apparatus, configured to aspirate the reagent from the reagent vessel and dispense the reagent into the reaction vessel, wherein the sample and the reagent form a mixed solution;
   a multi-color Light-Emitting Diode (LED) configured to provide a light beam, wherein the multi-color LED comprises a shell and a plurality of light-emitting chips arranged in the shell, and the plurality of light-emitting chips respectively generate light beams with different wavelength ranges;
   a control component, configured to control the multi-color LED to output a light beam with a respective wavelength range within a period of time, and apply the outputted light beam to irradiate the reaction vessel containing a test object, wherein the test object is the sample or the mixed solution;
   a receiving component, configured to acquire interferent test optical information and item test optical information after the light beam irradiates the test object, wherein at least one test site is arranged between the multi-color LED and the receiving component, and the test site is configured to place the reaction vessel containing the test object; and
   an analysis component, configured to obtain an interferent test result of the test object according to the interferent test optical information, and to obtain an item test result of the test object according to the interferent test result and the item test optical information.
2. The sample analysis device according to example 1, wherein the receiving component is further configured to acquire the interferent test optical information and the item test optical information from a same test site when the multi-color LED irradiates the reaction vessel placed at the test site; the reaction vessel at the test site at least contains the sample when the receiving component acquires the interferent test optical information; and the reaction vessel at the test site contains the mixed solution when the receiving component acquires the item test optical information.
3. The sample analysis device according to example 1, wherein the at least one test site comprises at least one interferent test site and at least one item test site;
   the receiving component is further configured to acquire the interferent test optical information from the interferent test site when the multi-color LED irradiates the reaction vessel placed at the interferent test site, and to acquire the item test optical information from the item test site when the multi-color LED irradiates the reaction vessel placed at the item test site; the reaction vessel at the interferent test site at least contains the sample when the receiving component acquires the interferent test optical information; and the reaction vessel at the item test site contains the mixed solution when the receiving component acquires the item test optical information.
4. The sample analysis device according to example 1, wherein the control component is further configured to control the light beams with the different wavelength ranges emitted by the multi-color LED to irradiate the test object in the reaction vessel within a preset duration after the reagent dispensing apparatus adds the reagent into the reaction vessel containing the sample, to enable the receiving component to acquire the interferent test optical information.
5. The sample analysis device according to example 1, wherein the control component is further configured to: control the light beams with the different wavelength ranges emitted by the multi-color LED to irradiate the test object in the reaction vessel at the test site after at least the sample is added into the reaction vessel, to enable the receiving component to acquire the interferent test optical information; and
   obtain the interferent test result according to the interferent test optical information, and determine a wavelength range of a light beam for obtaining the item test result according to the interferent test result.
6. The sample analysis device according to any one of examples 1 to 5, wherein at least two test sites are arranged between the multi-color LED and the receiving component;
   the sample analysis device further comprises a one-to-multiple optical fiber bundle;
   an optical input end of the one-to-multiple optical fiber bundle is configured to receive the light beam, and each of a plurality of optical output ends of the one-to-multiple optical fiber bundle corresponds to a respective one of the at least two test sites.
7. The sample analysis device according to any one of examples 1 to 5, further comprising a multi-band pass filter arranged in a light beam transmission path, wherein
   the multi-band pass filter is arranged between the test site and the receiving component.
8. The sample analysis device according to any one of examples 1 to 5, wherein wavelength ranges of any two of the light beams with different wavelength ranges generated by the multi-color LED do not overlap.
9. A sample analysis device, comprising:
   a sample apparatus, configured to carry a sample vessel loaded with a sample;
   a reagent apparatus, configured to carry a reagent vessel loaded with a reagent;
   a sample loading apparatus, configured to aspirate the sample from the sample vessel and dispense the sample into a reaction vessel;
   a reagent dispensing apparatus, configured to aspirate the reagent from the reagent vessel and dispense the reagent into the reaction vessel, wherein the sample and the reagent form a mixed solution;
   two light source components, wherein at least one of the two light source components is a multi-color Light-Emitting Diode (LED), the multi-color LED comprises a shell and a plurality of light-emitting chips arranged in the shell, and the plurality of light-emitting chips respectively generate light beams with different wavelength ranges;
   a control component, configured to control the multi-color LED to output a light beam with a respective wavelength range within a period of time, and apply the outputted light beam to irradiate the reaction vessel that is placed at a test site and contains a test object, wherein the test object is the sample or the mixed solution;
   a receiving component, wherein at least one test site is arranged between either of the two light source components and the receiving component, and the receiving component is configured to acquire interferent test optical information and item test optical information after the light beam irradiates the test object; and
   an analysis component, configured to obtain an interferent test result of the test object according to the interferent test optical information, and to obtain an item test result of the test object according to the interferent test result and the item test optical information.
10. The sample analysis device according to example 9, wherein the test site comprises at least one interferent test site and at least one item test site;
   one of the two light source components is the multi-color LED, the other light source component is a multi-color LED, the other light source component comprises a shell and a plurality of light-emitting chips arranged in the shell, and the plurality of light-emitting chips respectively generate light beams with different wavelength ranges;
   the interferent test site is arranged between one light source component and the receiving component; and
   the item test site is arranged between the other light source component and the receiving component.
11. The sample analysis device according to example 9, wherein the test site comprises at least one interferent test site and at least one item test site;
   one of the two light source components is the multi-color LED, and the other light source component is a light source combination structure having a plurality of monochromatic LEDs, each of the plurality of monochromatic LEDs in the light source combination structure is configured to generate a light beam with a respective wavelength range, and the wavelength ranges of the light beams generated by different monochromatic LEDs are different;
   the interferent test site is arranged between one light source component and the receiving component; and
   the item test site is arranged between the other light source component and the receiving component.
12. The sample analysis device according to example 11, wherein
   at least two item test sites are arranged between the light source combination structure and the receiving component;
   the sample analysis device further comprises a one-to-multiple optical fiber bundle;
   an optical input end of the one-to-multiple optical fiber bundle is configured to receive the light beam, and each of a plurality of optical output ends of the one-to-multiple optical fiber bundle corresponds to a respective one of the at least two item test sites.
13. The sample analysis device according to example 9, wherein
   the receiving component is configured to acquire the interferent test optical information and the item test optical information from a same test site and acquire other item test optical information from other test sites, when the two light source components irradiate the reaction vessels placed at the test sites; the reaction vessel at the test site at least contains the sample when the receiving component acquires the interferent test optical information; and the reaction vessel at the test site contains the mixed solution when the receiving component acquires the item test optical information.
14. The sample analysis device according to example 9, wherein at least two test sites are arranged between the two light source components and the receiving component, at least one of the at least two test sites is an interferent test site, and other test sites are item test sites;
   the receiving component is further configured to acquire the interferent test optical information from the interferent test site when the light source component irradiates the reaction vessel placed at the interferent test site, and to acquire the item test optical information from the item test sites when the light source component irradiates the reaction vessels placed at the item test sites; the reaction vessel at the interferent test site at least contains the sample when the receiving component acquires the interferent test optical information; and the reaction vessels at the item test sites contain the mixed solution when the receiving component acquires the item test optical information.
15. The sample analysis device according to example 9, wherein the control component is further configured to control the light source component to irradiate the reaction vessel within a preset duration after the reagent dispensing apparatus adds the reagent into the reaction vessel containing the sample, to enable the receiving component to acquire the interferent test optical information.
16. The sample analysis device according to example 9, wherein the control component is further configured to: control the light source component to apply the light beam to irradiate the reaction vessel at the test site after at least the sample is added into the reaction vessel, to enable the receiving component to acquire the interferent test optical information; obtain the interferent test result according to the interferent test optical information; and determine a wavelength range of a light beam for obtaining the item test result according to the interferent test result.
17. The sample analysis device according to any one of examples 9 to 16, further comprising a multi-band pass filter arranged in a light beam transmission path; and
   the multi-band pass filter is arranged between the test site and the receiving component.
18. The sample analysis device according to any one of examples 9 to 16, wherein wavelength ranges of any two of the light beams with different wavelength ranges generated by the multi-color LED do not overlap.
19. A sample analysis device, comprising:
   a test sample preparation apparatus, configured to prepare a test object, and dispense the test object into a reaction vessel, wherein the test object is a sample or a mixed solution of the sample and a reagent, and the sample is a biological sample;
   at least one multi-color Light-Emitting Diode (LED) configured to provide a light beam, wherein the multi-color LED comprises a shell and a plurality of light-emitting chips arranged in the shell, and the plurality of light-emitting chips respectively generate light beams with different wavelength ranges;
   a control component, configured to control the multi-color LED to output a light beam with a respective wavelength range within a period of time, and apply the outputted light beam to irradiate the reaction vessel that is placed at a test site and contains the test object;
   a receiving component, configured to acquire optical information after the light beam irradiates the test object, wherein the test site is arranged between the multi-color LED and the receiving component, and the test site is configured to place the reaction vessel containing the test object; and
   an analysis component, configured to obtain an analysis result of the test object according to the optical information.
20. A sample analysis method, comprising:
   dispensing a test object into a reaction vessel, wherein the test object is a sample or a mixed solution of the sample and a reagent, and the reaction vessel containing the test object is placed at a test site;
   controlling a multi-color Light-Emitting Diode (LED) configured to provide a light beam to output the light beam with a respective wavelength range within a period of time, and applying the outputted light beam to irradiate the reaction vessel that is placed at the test site and contains the test object, wherein the multi-color LED comprises a shell and a plurality of light-emitting chips arranged in the shell, and the plurality of light-emitting chips respectively generate light beams with different wavelength ranges;
   acquiring interferent test optical information and item test optical information after the light beam irradiates the test object; and
   obtaining an interferent test result of the test object according to the interferent test optical information, and obtaining an item test result of the test object according to the interferent test result and the item test optical information.
21. The sample analysis method according to example 20, further comprising:
   acquiring the interferent test optical information and the item test optical information from a same test site when the multi-color LED irradiates the reaction vessel placed at the test site;
   wherein the reaction vessel at the test site at least contains the sample when the interferent test optical information is acquired, and the reaction vessel at the test site contains the mixed solution when the item test optical information is acquired.
22. The sample analysis method according to example 20, wherein the test site comprises at least one interferent test site and at least one item test site, and the method further comprises:
   acquiring the interferent test optical information from the interferent test site when the multi-color LED irradiates the reaction vessel placed at the interferent test site; and acquiring the item test optical information from the item test site when the multi-color LED irradiates the reaction vessel placed at the item test site;
   wherein the reaction vessel at the interferent test site at least contains the sample when the interferent test optical information is acquired, and the reaction vessel at the item test site contains the mixed solution when the item test optical information is acquired.
23. The sample analysis method according to example 20, further comprising:
   controlling the light beams with different wavelength ranges emitted by the multi-color LED to irradiate the test object in the reaction vessel within a preset duration after the reagent is added into the reaction vessel containing the sample, to acquire the interferent test optical information.
24. The sample analysis method according to example 20, further comprising:
   controlling the light beams with different wavelength ranges emitted by the multi-color LED to irradiate the test object in the reaction vessel at the test site after at least the sample is added into the reaction vessel, so as to acquire the interferent test optical information; and
   obtaining the interferent test result according to the interferent test optical information, and determining a wavelength range of a light beam for obtaining the item test result according to the interferent test result.
25. A sample analysis method, comprising:
   dispensing a test object into a reaction vessel, wherein the test object is a sample or a mixed solution of the sample and a reagent, and the reaction vessel containing the test object is placed at a test site;
   controlling a light beam outputted from a light source component to irradiate the reaction vessel that is placed at the test site and contains the test object, wherein the light source component comprises two light source components, at least one of the two light source components is a multi-color Light-Emitting Diode (LED), the multi-color LED comprises a shell and a plurality of light-emitting chips arranged in the shell, the plurality of light-emitting chips respectively generate light beams with different wavelength ranges, and the multi-color LED is configured to output a light beam with a respective wavelength range within a period of time;
   acquiring interferent test optical information and item test optical information after the light beam irradiates the test object; and
   obtaining an interferent test result of the test object according to the interferent test optical information, and obtaining an item test result of the test object according to the interferent test result and the item test optical information.
26. The sample analysis method according to example 25, wherein the test site comprises at least one interferent test site and at least one item test site, one of the two light source components is the multi-color LED, the other light source component is a multi-color LED, the other light source component comprises a shell and a plurality of light-emitting chips arranged in the shell, and the plurality of light-emitting chips respectively generate light beams with different wavelength ranges, and the method further comprises:
   controlling the light beam outputted from one light source component to irradiate the reaction vessel that is placed at the interferent test site and contains the test object; and
   controlling the light beam outputted from the other light source component to irradiate the reaction vessel that is placed at the item test site and contains the test object.
27. The sample analysis method according to example 25, wherein the test site comprises at least one interferent test site and at least one item test site, one of the two light source components is the multi-color LED, the other light source component is a light source combination structure having a plurality of monochromatic LEDs, each of the plurality of monochromatic LEDs in the light source combination structure generates a light beam with a respective wavelength range, and the wavelength ranges of the light beams generated by different monochromatic LEDs are different; and the method further comprises:
   controlling the light beam outputted from one light source component to irradiate the reaction vessel that is placed at the interferent test site and contains the test object; and
   controlling the light beam outputted from the other light source component to irradiate the reaction vessel that is placed at the item test site and contains the test object.
28. The sample analysis method according to example 27, further comprising:
   controlling the light beam outputted from the light source combination structure to irradiate the reaction vessel that is placed at the item test site and contains the test object;
   wherein the item test site comprises at least two item test sites, the light beam outputted from the light source combination structure is received by an optical input end of a one-to-multiple optical fiber bundle, and is transmitted to the at least two item test sites through a plurality of optical output ends of the one-to-multiple optical fiber bundle, each of the plurality of optical output ends of the one-to-multiple optical fiber bundle corresponds to a respective one of the at least two item test sites.
29. The sample analysis method according to example 25, further comprising:
   acquiring the interferent test optical information and the item test optical information from a same test site, and acquiring other item test optical information from other test sites, when the light source component irradiates the reaction vessels placed at the test sites;
   wherein the reaction vessel at the test site at least contains the sample when the interferent test optical information is acquired, and the reaction vessels at the test sites contain the mixed solution when the item test optical information is acquired.
30. The sample analysis method according to example 25, wherein the test site comprises at least two test sites, at least one of the at least two test sites is an interferent test site, and other test sites are item test sites; and the method further comprises:
   acquiring the interferent test optical information from the interferent test site when the light source component irradiates the reaction vessel placed at the interferent test site, and acquiring the item test optical information from the item test sites when the light source component irradiates the reaction vessels placed at the item test sites;
   wherein the reaction vessel at the interferent test site at least contains the sample when the interferent test optical information is acquired, and the reaction vessels at the item test sites contain the mixed solution when the item test optical information is acquired.
31. The sample analysis method according to example 25, further comprising:
   controlling the light source component to irradiate the reaction vessel within a preset duration after the reagent is added into the reaction vessel containing the sample, to acquire the interferent test optical information.
32. The sample analysis method according to example 25, further comprising:
   controlling the light source component to apply the light beam to irradiate the reaction vessel at the test site after at least the sample is added into the reaction vessel, so as to acquire the interferent test optical information; and
   obtaining the interferent test result according to the interferent test optical information, and determining a wavelength range of a light beam for obtaining the item test result according to the interferent test result.
33. A sample analysis method, comprising:
   dispensing a test object into a reaction vessel, wherein the test object is a sample or a mixed solution of the sample and a reagent, the sample is a biological sample, and the reaction vessel containing the test object is located at a test site;
   controlling a multi-color Light-Emitting Diode (LED) configured to provide a light beam to output the light beam with a respective wavelength range within a period of time, and applying the outputted light beam to irradiate the reaction vessel that is placed at the test site and contains the test object, wherein the multi-color LED comprises a shell and a plurality of light-emitting chips arranged in the shell, and the plurality of light-emitting chips respectively generate light beams with different wavelength ranges;
   acquiring optical information after the light beam irradiates the test object; and
   obtaining an analysis result of the test object according to the optical information.

## Claims

1. A sample analysis device, **characterized by** comprising:
a sample apparatus, configured to carry a sample vessel loaded with a sample;
a reagent apparatus, configured to carry a reagent vessel loaded with a reagent;
a sample loading apparatus, configured to aspirate the sample from the sample vessel and dispense the sample into a reaction vessel;
a reagent dispensing apparatus, configured to aspirate the reagent from the reagent vessel and dispense the reagent into the reaction vessel, wherein the sample and the reagent form a mixed solution;
a multi-color Light-Emitting Diode (LED) configured to provide a light beam, wherein the multi-color LED comprises a shell and a plurality of light-emitting chips arranged in the shell, and the plurality of light-emitting chips respectively generate light beams with different wavelength ranges;
a control component, configured to control the multi-color LED to output a light beam with a respective wavelength range within a period of time, and apply the outputted light beam to irradiate the reaction vessel containing a test object, wherein the test object is the sample or the mixed solution;
a receiving component, configured to acquire interferent test optical information and item test optical information after the light beam irradiates the test object, wherein at least one test site is arranged between the multi-color LED and the receiving component, and the test site is configured to place the reaction vessel containing the test object; and
an analysis component, configured to obtain an interferent test result of the test object according to the interferent test optical information, and to obtain an item test result of the test object according to the interferent test result and the item test optical information.

2. The sample analysis device according to claim 1, wherein the receiving component is further configured to acquire the interferent test optical information and the item test optical information from a same test site when the multi-color LED irradiates the reaction vessel placed at the test site; the reaction vessel at the test site at least contains the sample when the receiving component acquires the interferent test optical information; and the reaction vessel at the test site contains the mixed solution when the receiving component acquires the item test optical information.

3. The sample analysis device according to claim 1, wherein the at least one test site comprises at least one interferent test site and at least one item test site;
the receiving component is further configured to acquire the interferent test optical information from the interferent test site when the multi-color LED irradiates the reaction vessel placed at the interferent test site, and to acquire the item test optical information from the item test site when the multi-color LED irradiates the reaction vessel placed at the item test site; the reaction vessel at the interferent test site at least contains the sample when the receiving component acquires the interferent test optical information; and the reaction vessel at the item test site contains the mixed solution when the receiving component acquires the item test optical information.

4. The sample analysis device according to claim 1, wherein
the control component is further configured to control the light beams with the different wavelength ranges emitted by the multi-color LED to irradiate the test object in the reaction vessel within a preset duration after the reagent dispensing apparatus adds the reagent into the reaction vessel containing the sample, to enable the receiving component to acquire the interferent test optical information;
or,
the control component is further configured to: control the light beams with the different wavelength ranges emitted by the multi-color LED to irradiate the test object in the reaction vessel at the test site after at least the sample is added into the reaction vessel, to enable the receiving component to acquire the interferent test optical information; obtain the interferent test result according to the interferent test optical information; and determine a wavelength range of a light beam for obtaining the item test result according to the interferent test result.

5. The sample analysis device according to any one of claims 1 to 4, wherein
at least two test sites are arranged between the multi-color LED and the receiving component, the sample analysis device further comprises a one-to-multiple optical fiber bundle, an optical input end of the one-to-multiple optical fiber bundle is configured to receive the light beam, and each of a plurality of optical output ends of the one-to-multiple optical fiber bundle corresponds to a respective one of the at least two test sites;
and/or,
the sample analysis device further comprises a multi-band pass filter arranged in a light beam transmission path, and the multi-band pass filter is arranged between the test site and the receiving component,
and/or,
wavelength ranges of any two of the light beams with different wavelength ranges generated by the multi-color LED do not overlap.

6. A sample analysis device, **characterized by** comprising:
a sample apparatus, configured to carry a sample vessel loaded with a sample;
a reagent apparatus, configured to carry a reagent vessel loaded with a reagent;
a sample loading apparatus, configured to aspirate the sample from the sample vessel and dispense the sample into a reaction vessel;
a reagent dispensing apparatus, configured to aspirate the reagent from the reagent vessel and dispense the reagent into the reaction vessel, wherein the sample and the reagent form a mixed solution;
two light source components, wherein at least one of the two light source components is a multi-color Light-Emitting Diode (LED), the multi-color LED comprises a shell and a plurality of light-emitting chips arranged in the shell, and the plurality of light-emitting chips respectively generate light beams with different wavelength ranges;
a control component, configured to control the multi-color LED to output a light beam with a respective wavelength range within a period of time, and apply the outputted light beam to irradiate the reaction vessel that is placed at a test site and contains a test object, wherein the test object is the sample or the mixed solution;
a receiving component, wherein at least one test site is arranged between either of the two light source components and the receiving component, and the receiving component is configured to acquire interferent test optical information and item test optical information after the light beam irradiates the test object; and
an analysis component, configured to obtain an interferent test result of the test object according to the interferent test optical information, and to obtain an item test result of the test object according to the interferent test result and the item test optical information.

7. The sample analysis device according to claim 6, wherein the test site comprises at least one interferent test site and at least one item test site;
one of the two light source components is the multi-color LED, the other light source component is a multi-color LED, the other light source component comprises a shell and a plurality of light-emitting chips arranged in the shell, and the plurality of light-emitting chips respectively generate light beams with different wavelength ranges;
the interferent test site is arranged between one light source component and the receiving component; and
the item test site is arranged between the other light source component and the receiving component.

8. The sample analysis device according to claim 6, wherein the test site comprises at least one interferent test site and at least one item test site;
one of the two light source components is the multi-color LED, and the other light source component is a light source combination structure having a plurality of monochromatic LEDs, each of the plurality of monochromatic LEDs in the light source combination structure is configured to generate a light beam with a respective wavelength range, and the wavelength ranges of the light beams generated by different monochromatic LEDs are different;
the interferent test site is arranged between one light source component and the receiving component; and
the item test site is arranged between the other light source component and the receiving component.

9. The sample analysis device according to any one of claims 6 to 8, wherein
at least two item test sites are arranged between one of the two light source components and the receiving component, the sample analysis device further comprises a one-to-multiple optical fiber bundle, an optical input end of the one-to-multiple optical fiber bundle is configured to receive the light beam, and each of a plurality of optical output ends of the one-to-multiple optical fiber bundle corresponds to a respective one of the at least two item test sites,
and/or,
the sample analysis device further comprises a multi-band pass filter arranged in a light beam transmission path, and the multi-band pass filter is arranged between the test site and the receiving component,
and/or,
wavelength ranges of any two of the light beams with different wavelength ranges generated by the multi-color LED do not overlap.

10. The sample analysis device according to any one of claims 6 to 9, wherein
the receiving component is configured to acquire the interferent test optical information and the item test optical information from a same test site and acquire other item test optical information from other test sites, when the two light source components irradiate the reaction vessels placed at the test sites; the reaction vessel at the test site at least contains the sample when the receiving component acquires the interferent test optical information; and the reaction vessel at the test site contains the mixed solution when the receiving component acquires the item test optical information.

11. The sample analysis device according to any one of claims 6 to 10, wherein at least two test sites are arranged between the two light source components and the receiving component, at least one of the at least two test sites is an interferent test site, and other test sites are item test sites;
the receiving component is further configured to: acquire the interferent test optical information from the interferent test site when one of the two light source components irradiates the reaction vessel placed at the interferent test site; and to acquire the item test optical information from the item test sites when the other light source component irradiates the reaction vessels placed at the item test sites; wherein the reaction vessel at the interferent test site at least contains the sample when the receiving component acquires the interferent test optical information, and the reaction vessels at the item test sites contain the mixed solution when the receiving component acquires the item test optical information.

12. The sample analysis device according to any one of claims 6 to 11, wherein
the control component is further configured to control one of the two light source components to irradiate the reaction vessel within a preset duration after the reagent dispensing apparatus adds the reagent into the reaction vessel containing the sample, to enable the receiving component to acquire the interferent test optical information;
or,
the control component is further configured to: control one of the two light source components to apply the light beam to irradiate the reaction vessel at the test site after at least the sample is added into the reaction vessel, to enable the receiving component to acquire the interferent test optical information; obtain the interferent test result according to the interferent test optical information; and determine a wavelength range of a light beam for obtaining the item test result according to the interferent test result.

13. A sample analysis device, **characterized by** comprising:
a test sample preparation apparatus, configured to prepare a test object, and dispense the test object into a reaction vessel, wherein the test object is a sample or a mixed solution of the sample and a reagent, and the sample is a biological sample;
at least one multi-color Light-Emitting Diode (LED) configured to provide a light beam, wherein the multi-color LED comprises a shell and a plurality of light-emitting chips arranged in the shell, and the plurality of light-emitting chips respectively generate light beams with different wavelength ranges;
a control component, configured to control the multi-color LED to output a light beam with a respective wavelength range within a period of time, and apply the outputted light beam to irradiate the reaction vessel that is placed at a test site and contains the test object;
a receiving component, configured to acquire optical information after the light beam irradiates the test object, wherein the test site is arranged between the multi-color LED and the receiving component, and the test site is configured to place the reaction vessel containing the test object; and
an analysis component, configured to obtain an analysis result of the test object according to the optical information.

14. A sample analysis method implemented by the sample analysis device according to any one of claims 1 to 5, **characterized by** comprising:
dispensing a test object into a reaction vessel, wherein the test object is a sample or a mixed solution of the sample and a reagent, and the reaction vessel containing the test object is placed at a test site;
controlling a multi-color Light-Emitting Diode (LED) to output a light beam with a respective wavelength range within a period of time, and applying the outputted light beam to irradiate the reaction vessel that is placed at the test site and contains the test object, wherein the multi-color LED comprises a shell and a plurality of light-emitting chips arranged in the shell, and the plurality of light-emitting chips respectively generate light beams with different wavelength ranges;
acquiring interferent test optical information and item test optical information after the light beam irradiates the test object; and
obtaining an interferent test result of the test object according to the interferent test optical information, and obtaining an item test result of the test object according to the interferent test result and the item test optical information.

15. A sample analysis method implemented by the sample analysis device according to any one of claims 6 to 12, **characterized by** comprising:
dispensing a test object into a reaction vessel, wherein the test object is a sample or a mixed solution of the sample and a reagent, and the reaction vessel containing the test object is placed at a test site;
controlling a light beam outputted from a light source component to irradiate the reaction vessel that is placed at the test site and contains the test object, wherein the light source component comprises two light source components, at least one of the two light source components is a multi-color Light-Emitting Diode (LED), the multi-color LED comprises a shell and a plurality of light-emitting chips arranged in the shell, the plurality of light-emitting chips respectively generate light beams with different wavelength ranges, and the multi-color LED is configured to output a light beam with a respective wavelength range within a period of time;
acquiring interferent test optical information and item test optical information after the light beam irradiates the test object; and
obtaining an interferent test result of the test object according to the interferent test optical information, and obtaining an item test result of the test object according to the interferent test result and the item test optical information.
